# EUROPÄISCHE PATENTSCHRIFT

(11) **EP 0 431 325 B1**
(45) Veröffentlichungstag und Bekanntmachung des Hinweises auf die Patenterteilung: **27.10.1993**
(21) Anmeldenummer: 90121164.9
(22) Anmeldetag: 06.11.1990
(51) Int. Cl.: F16J 15/32

(54) **Kolben- oder Stangendichtung**
Piston or rod seal
Joint d'étanchéité pour piston ou pour tige

(30) Priorität: 02.12.1989 DE 3940005
(43) Veröffentlichungstag der Anmeldung: 12.06.1991
(73) Patentinhaber: Firma Carl Freudenberg, 69469 Weinheim (DE)
(72) Erfinder: Wetzel, Michael, W-6842 Bürstadt (DE)

(56) Entgegenhaltungen:
- EP-A- 0 256 221
- EP-A- 0 297 450
- DE-A- 3 603 669
- US-A- 2 643 147

## Beschreibung

Die Erfindung betrifft eine Kolben- oder Stangendichtung, umfassend einen in einer radial in Richtung des relativ bewegten Maschinenteiles gelagerten offenen, ersten Nut gelagerten Abstreifring aus einem PTFE-Werkstoff, der durch einen auf den Nutgrund der ersten Nut gelagerten O-Ring aus gummielastischem Werkstoff an das relativ bewegte Maschinenteil angepreßt ist, wobei der Abstreifring auf der der Kolbenstange zugewandten Seite wenigstens zwei durch eine zweite Nut voneinander getrennte Dichtlippen aufweist, die die Kolbenstange mit Dichtkanten berühren und auf der dem O-Ring zugewandten Seite eine Kegelfläche, die einen axial in Richtung der druckabgewandten Seite zunehmenden Außendurchmesser aufweist.

Eine solche Kolbenstangendichtung ist aus der DE-A-36 03 669 bekannt. Das damit erzielte Abdichtungsergebnis ist insbesondere im langfristigen Gebrauch wenig befriedigend.

Der Erfindung liegt die Aufgabe zugrunde, eine solche Kolbenstangendichtung derart weiterzuentwickeln, daß sich über eine längere Gebrauchsdauer ein deutlich verbessertes Abdichtungsergebnis ergibt.

Diese Aufgabe wird erfindungsgemäß bei einer Kolbenstangendichtung der eingangs genannten Art mit den kennzeichnenden Merkmalen von Anspruch 1 gelöst. Auf vorteilhafte Ausgestaltungen nehmen die Unteransprüche Bezug.

Bei der erfindungsgemäßen Kolbenstangendichtung ist es vorgesehen, daß die zweite Nut einen gerundeten Nutgrund aufweist mit einem Radius, der etwa der radialen Tiefe der zweiten Nut entspricht und daß die Kegelfläche unter Vermeidung einer nennenswerten Richtungsänderung zumindest die Radialebenen aller Dichtkanten der Dichtlippen als kontinuierlich durchgehende Fläche übergreift. Das Profil des Abstreifringes ist hierdurch in der Zwischenzone zwischen den Dichtkanten Kerbwirkungen weder aus einer Richtung radial von innen noch von außen ausgesetzt, was Deformationen während der bestimmungsgemäßen Verwendung weitgehend verhindert. Die relative Zuordnung der Dichtlippen zur Oberfläche des abzudichtenden Maschinenteiles bleibt dadurch im langfristigen Gebrauch weitgehend erhalten. Für die Erzielung eines guten Abdichtungsergebnisses ist das von großem Vorteil. Darüber hinaus erfährt der die elastische Anpressung der Dichtkanten an das relativ bewegliche Maschinenteil maßgeblich bestimmende, auf dem Nutgrund der ersten Nut abgestüzte O-Ring aus gummielastischem Werkstoff während der bestimmungsgemäßen Verwendung keine statische Deformierung, die sein Lastaufnahmevermögen überschreitet. Der O-Ring vermag vielmehr den hin- und hergehenden Bewegungen des relativ bewegbaren Maschinenteiles elastisch nachgiebig zu folgen und sich hierbei in kurzen Zeitabständen zu entspannen, was über lange Zeiträume eine hochwertige und ausgeglichene Anpressung der Dichtlippen an das abzudichtende Maschinenteil gewährleistet.

Der O-Ring hat ein kreisförmig begrenztes Profil und einen Durchmesser, der kleiner ist als die axiale Länge der ihn aufnehmenden, ersten Nut. Er liegt bei einer Stangendichtung mit seiner radial nach außen weisenden Seite an dem Nutgrund der ersten Nut an, der die abzudichtende Stange als konzentrische Zylinderfläche umschließt. Mit seiner Innenseite berührt der O-Ring den Abstreifring auf einer Kegelfläche, die unter Vermeidung einer nennenswerten Richtungsänderung zumindest die Radialebenen sämtlicher Dichtkanten als kontinuierlich durchgehende Fläche übergreift und eine axiale Länge hat, die wenigstens derjenigen des O-Ringes entspricht. Hierdurch ist eine gute Relativbeweglichkeit des O-Ringes gewährleistet, was während des Arbeitshubes sicherstellt, daß die in Richtung des abzudichtenden Raumes aufeinanderfolgenden Dichtlippen mit einer stetig abnehmenden Kraft an die abzudichtende Stange angepreßt werden. Die Entstehung eines Flüssigkeitsdruckes in der zweiten Nut, der während des Arbeitshubes das Druckniveau in dem abzudichtenden Raum überschreitet, wird hierdurch unterbunden.

Die zweite Nut soll einen senkrechten Abstand von der Kegelfläche aufweisen, der wenigstens dreimal, zweckmäßig wenigstens fünfmal so groß ist wie ihre radiale Tiefe. Unerwünschten Formveränderungen des Abstreifringes während des Arbeitshubes läßt sich hierdurch begegnen.

Die die Kolbenstange konzentrisch umschließende Kegelfläche soll einen Kegelwinkel haben, der 5 bis 30°, vorzugsweise 10 bis 20° beträgt. Neben einer ausreichenden Anpressung des Abstreifringes an die Oberfläche der abzudichtenden Kolbenstange wird hierdurch eine ausreichende Relativbeweglichkeit des O-Ringes für lange Zeiträume gewährleistet.

Der Abstreifring kann im Bereich seiner axialen Stirnflächen mit radial nach außen vorspringenden Kragen versehen sein, um ein Auseinanderfallen der den Abstreifring und den O-Ring umfassenden Einbaueinheit zu verhindern. Die Montage wird hierdurch wesentlich vereinfacht. Bei einer Kolbendichtung sind die Angaben in sinngemäßer Weise anzuwenden. Die diesbezügliche Übertragung von Merkmalen bereitet dem Fachmann keine Schwierigkeiten.

Der Gegenstand der Erfindung wird nachfolged anhand der in der Anlage beigefügten Zeichnung weiter verdeutlicht. Es zeigen:

Figur 1
Eine Kolbenstangendichtung in halb geschnittener Darstellung und im eingebauten Zustand.

Figuren 2 und 3
Zwei alternative Ausführungen in nicht eingebautem Zustand.

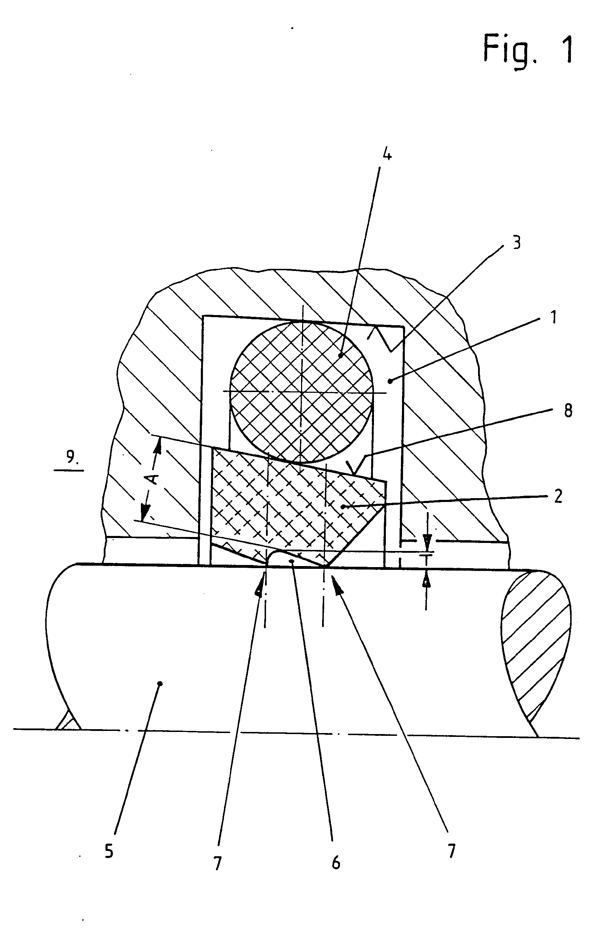

Die in Figur 1 gezeigte Kolbenstangendichtung umfaßt einen in einer radial nach innen offenen, ersten Nut gelagerten Abstreifring 2 aus einem PTFE-Werkstoff, beispielsweise einem gefüllten PTFE, der durch einen auf dem Nutgrund 3 der ersten Nut 1 abgestützten O-Ring 4 aus gummielastischem Werkstoff an die abzudichtende Kolbenstange 5 angepreßt ist. Der Abstreifring 2 ist auf der der Kolbenstange 5 zugewandten Seite mit zwei Dichtkanten 7 versehen, die Dichtlippen begrenzen und durch eine zweite Nut 6 voneinander getrennt sind. Der Abstreifring 2 ist auf der dem O-Ring 4 zugewandten Seite durch eine Kegelfläche 8 begrenzt. Diese hat einen axial in Richtung der druckabgewandten Seite 9 zunehmenden Außendurchmesser. Die erste Nut 1, der O-Ring 4, der Abstreifring 2 und die Kolbenstange 5 sind rotationssymmetrisch gestaltet und einander konzentrisch zugeordnet.

Der die zweite Nut 6 des Abstreifringes 2 in radialer Richtung nach außen begrenzenden Nutgrund 10 weist einen Radius auf, der etwa der radialen Tiefe T der Nut 6 entspricht. Diese ist sehr gering bemessen und beträgt unabhängig vom Durchmesser der abzudichtenden Kolbenstange 5 stets nur 0,2 bis 0,4 mm, zweckmäßig 0,3 mm. Der Abstreifring ist auf der Außenseite durch eine Kegelfläche 8 begrenzt, die unter Vermeidung einer nennenswerten Richtungsänderung zumindest die radialen Ebenen beider Dichtkanten 7 als kontinuierlich durchgehende Fläche übergreift. Der Kegelwinkel der Kegelfläche 8 beträgt bei dem gezeigten Ausführungsbeispiel 18°.

Die zweite Nut 6 hat einen senkrechten Abstand A von der Kegelfläche 8, der ca. sechsmal so groß ist wie die radiale Tiefe T der zweiten Nut. Hierdurch sowie durch die Ausrundung des Nutgrundes 10 der in dem Abstreifring 2 angebrachten zweiten Nut 6 wird eine gute Formbeständigkeit erhalten, was über lange Zeiträume eine ausgeglichene Zuordnung der Dichtlippen 7 zur Oberfläche der abzudichtenden Kolbenstange 5 gewährleistet.

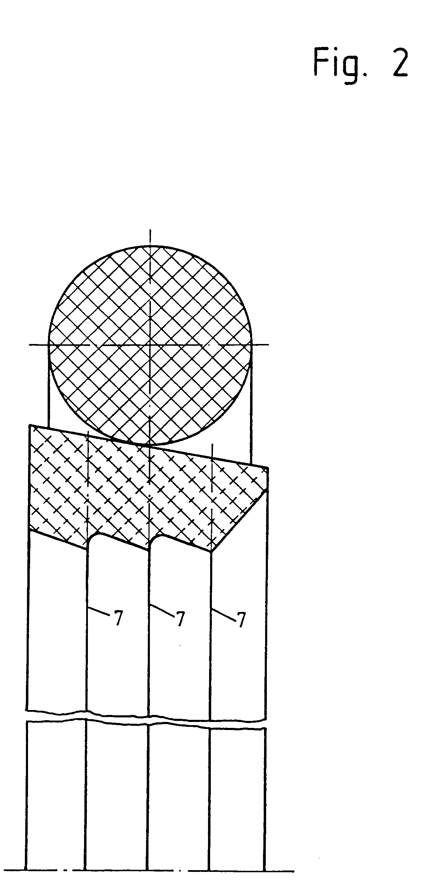

Die in Figur 2 gezeigte Ausführung ist der vorstehend beschriebenen Kolbenstangendichtung ähnlich. Der Abstreifring hat bei dieser Ausführung jedoch drei in axialer Richtung hintereinander angeordnete Dichtkanten 7, was das Abdichtungsergebnis verbessert.

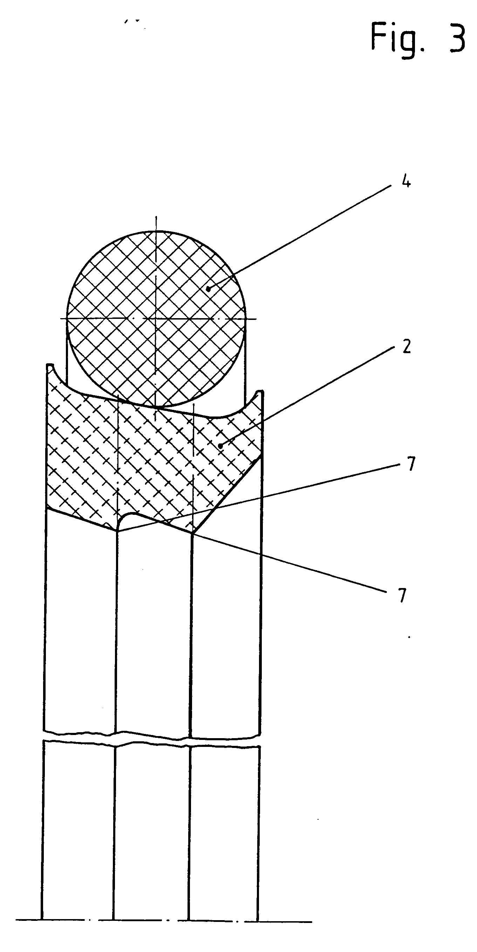

Die in Figur 3 gezeigte Ausführung unterscheidet sich von der in Figur 1 gezeigten und vorstehend beschriebenen Ausführung im wesentlichen dadurch, daß der Abstreifring 2 im Bereich seiner axialen Begrenzungsflächen mit in radialer Richtung nach außen vorstehende Kragen versehen ist. Diese haben einen Außendurchmesser, der größer ist als der Innendurchmesser des O-Ringes 4 im entspannten Zustand. Der O-Ring 4 und der Abstreifring 2 bilden hierdurch im nicht eingebauten Zustand eine in sich geschlossene Baueinheit, was die Montage vereinfacht.

## Patentansprüche

1. Kolben- oder Stanqendichtunq, umfassend einen in einer radial in Richtung des relativ bewegten Maschinenteiles offenen, ersten Nut (1) gelagerten Abstreifring (2) aus einem PTFE-Werkstoff, der durch einen auf dem Nutgrund (3) der ersten Nut gelagerten O-Ring (4) aus gummielastischem Werkstoff an das relativ bewegte Maschinenteil angepreßt ist, wobei der Abstreifring auf der dem relativ bewegten Maschinenteil zugewandten Seite wenigstens zwei durch eine zweite Nute (6) voneinander getrennte Dichtkanten (7) aufweist und auf der dem O-Ring zugewandten Seite eine Kegelfläche (8), die einen axial in Richtung der druckabgewandten Seite zunehmenden Außendurchmesser aufweist, dadurch gekennzeichnet, daß die zweite Nut (6) einen gerundeten Nutgrund aufweist mit einem Radius (R), der etwa der radialen Tiefe (T) der zweiten Nut (6) entspricht und daß die Kegelfläche (8) unter Vermeidung einer nennenswerten Richtungsänderung zumindest die Radialebenen aller Dichtkanten (7) als kontinuierlich durchgehende Fläche übergreift.

2. Kolben- oder Stangendichtung nach Anspruch 1, dadurch gekennzeichnet, daß die zweite Nut (6) einen senkrechten Abstand (A) von der Kegelfläche (8) aufweist, der wenigstens drei mal so groß ist wie die Tiefe (T) der zweiten Nut (6).

3. Kolben- oder Stangendichtung nach Anspruch 1, dadurch gekennzeichnet, daß die zweite Nut (6) einen senkrechten Abstand (A) von der Kegelfläche (8) aufweist, der wenigstens fünf mal so groß ist wie die Tiefe (T) der zweiten Nut (6).

4. Kolben- oder Stangendichtung nach Anspruch 1 bis 3, dadurch gekennzeichnet, daß die Kegelfläche (8) einen Kegelwinkel von 5 bis 30°, vorzugsweise 10 bis 20°, aufweist.

5. Kolben- oder Stangendichtung nach Anspruch 1 bis 4, dadurch gekennzeichnet, daß die radiale Tiefe (T) der zweiten Nut (6) 0,20 bis 0,35 mal so groß ist wie der axiale Abstand der benachbarten Dichtkanten.

## Claims

1. A piston packing or rod packing comprising a scraper ring (2) which is mounted in a first groove (1) which is radially open towards the relatively moved machine part, said scraper ring (2) being made of a PTFE material which is pressed against the relatively moved machine part by an O ring (4) of elastomeric material which is mounted on the groove base (3) of the first groove, and having on the side facing the relatively moved machine part at least two sealing edges (7) which are separated from one another by a second groove (6) and on the side facing the O ring a conical surface (8) which has an external diameter which increases axially towards the side facing away from the pressure, characterised in that the second groove (6) has a rounded groove base with a radius (R) corresponding approximately to the radial depth (T) of the second groove (6) and in that the conical surface (8) extends, as a continuously through-going surface, over at least the radial planes of all sealing edges (7), avoiding any significant change of direction.

2. A piston packing or rod packing according to Claim 1, characterised in that the second groove (6) has a perpendicular spacing (A) from the conical surface (8), which spacing is at least three times as large as the depth (T) of the second groove (6).

3. A piston packing or rod packing according to Claim 1, characterised in that the second groove (6) has a perpendicular spacing (A) from the conical surface (8), which spacing is at least five times as large as the depth (T) of the second groove (6).

4. A piston packing or rod packing according to any of Claims 1 to 3, characterised in that the conical surface (8) has a conical angle of 5 to 30°, preferably 10 to 20°.

5. A piston packing or rod packing according to any of Claims 1 to 4, characterised in that the radial depth (T) of the second groove (6) is 0.20 to 0.35 times as large as the axial spacing of the neighbouring sealing edges.

## Revendications

1. Joint d'étanchéité pour piston ou pour tige, comprenant un segment racleur (2) constitué dans un matériau de PTFE, logé dans une première gorge (1) ouverte radialement en direction de la pièce mécanique en mouvement relatif, segment qui est serré contre la pièce mécanique en mouvement relatif au moyen d'un joint torique (4) constitué dans un matériau de gomme élastique et situé sur le fond (3) de la première gorge, ce segment racleur étant pourvu, sur le côté tourné vers la pièce de machine en mouvement relatif, d'au moins deux arêtes d'étanchéité (7) séparées l'une de l'autre par une deuxième gorge (6) et, sur le côté tourné vers le joint torique, d'une surface conique (8) pourvue d'un diamètre extérieur croissant axialement en direction du côté éloigné de la pression, caractérisé par le fait que la deuxième gorge (6) est pourvue d'un fond arrondi dont le rayon (R) correspond à peu près à la profondeur radiale (T) de la deuxième gorge (6) et que, à condition d'éviter un changement de direction notable, la surface conique (8), constituée comme une surface continue sans fin, recouvre au moins les plans radiaux de toutes les arêtes d'étanchéité (7).

2. Joint d'étanchéité pour piston ou pour tige selon la revendication 1, caractérisé par le fait que la deuxième gorge (6) est située à une distance verticale (A) de la surface conique (8) égale à au moins trois fois la profondeur (T) de cette deuxième gorge (6).

3. Joint d'étanchéité pour piston ou pour tige selon la revendication 1, caractérisé par le fait que la deuxième gorge (6) est située à une distance verticale (A) de la surface conique (8) égale à au moins cinq fois la profondeur (T) de cette deuxième gorge (6).

4. Joint d'étanchéité pour piston ou pour tige selon les revendications 1 à 3, caractérisé par le fait que la surface conique (8) présente un angle conique mesurant de 5° jusqu'à 30°, de préférence de 10° jusqu'à 20°.

5. Joint d'étanchéité pour piston ou pour tige selon les revendications 1 à 4, caractérisé par le fait que la profondeur radiale (T) de la deuxième gorge (6) mesure de 0,20 jusqu'à 0,35 fois la distance axiale des arêtes d'étanchéité voisines.
